# EUROPÄISCHE PATENTSCHRIFT

(11) **EP 3 327 527 B1**
(45) Veröffentlichungstag und Bekanntmachung des Hinweises auf die Patenterteilung: **29.05.2019**
(21) Anmeldenummer: 17201131.4
(22) Anmeldetag: 10.11.2017
(51) Int. Cl.: G05B 19/418, H04W 4/38, H04W 4/40, H04W 4/80, H04L 29/08

(54) **UNBEMANNTE FAHRZEUGE ZUR DATENERFASSUNG IN INDUSTRIEANLAGEN**
UNMANNED VEHICLES FOR DATA ACQUISITION IN INDUSTRIAL FACILITIES
VÉHICULES NON OCCUPÉS DESTINÉS À LA COLLECTE DE DONNÉES DANS DES INSTALLATIONS INDUSTRIELLES

(30) Priorität: 25.11.2016 DE 102016223438
(43) Veröffentlichungstag der Anmeldung: 30.05.2018
(73) Patentinhaber: SMS Group GmbH, 40237 Düsseldorf (DE)
(72) Erfinder: Haschke, Thomas, 57319 Bad Berleburg (DE); Müller, Torsten, 57223 Kreuztal (DE); Dilthey, Steffen, 57223 Kreuztal (DE)
(74) Vertreter: Klüppel, Walter

(56) Entgegenhaltungen:
- WO-A1-2007/021425
- US-A1- 2014 024 313

## Beschreibung

### Technisches Gebiet

Die Erfindung betrifft ein Verfahren und ein System zur Datenerfassung in einer Industrieanlage, insbesondere einer hüttentechnischen Anlage, wie etwa einem Kalt- oder Warmwalzwerk, einer Bandbehandlungsanlage oder einem Stahlwerk.

### Hintergrund der Erfindung

In Industrieanlagen werden zunehmend Maschinenkomponenten und Bauteile eingesetzt, die Sensoren oder andere Mittel zur automatischen Überwachung des Betriebs, sowie Vorrichtungen zur eigenständigen Datenverarbeitung aufweisen. Betriebsdaten werden lokal, durch das jeweilige Bauteil autonom aufgezeichnet und verarbeitet, beispielsweise digitalisiert, und an einen Kommunikationspartner, der etwa eine zentrale Datenverarbeitungseinrichtung sein kann, übertragen. Beispielsweise lassen sich auf diese Weise kontinuierlich Betriebsparameter, wie etwa die Drehzahl von Rollen im Walzwerk, Schwingungen, Druck und Temperatur messen, Verschleißprüfungen durchführen, die Produktqualität bestimmen, Fehler erkennen usw. Aus den erfassten Betriebsdaten und gegebenenfalls weiteren Daten, die beispielsweise aus Modellrechnungen gewonnen werden, lässt sich der aktuelle Anlagenzustand bestimmen. Die Informationen können genutzt werden, um durch Kommunikation mit entsprechend ausgerüsteten Bauteilen die Prozessführung in der Anlage zu optimieren. Wenn beispielsweise ein solches "intelligentes" Bauteil aufgrund von Überlastung einen Schaden erkennt, kann es der Prozessführung mitteilen, dass eine Wartung erforderlich ist. Die Prozessführung wiederum kann veranlassen, dass das Bauteil bis zur Reparatur oder zum Austausch weniger belastet wird. Der Zugriff auf die Daten, die lokal an den jeweiligen Bauteilen ermittelt wurden, sowie die Kommunikation zur Steuerung derselben erfolgt in vielen Fällen drahtlos.

So beschreibt die WO 2007/021425 A1 ein Verfahren zur Verfolgung von Betriebsparametern eines Antriebsstrangs in einem Walzwerksystem, bei dem die von Sensoren erfassten und lokal digitalisierten Daten über RF-Signale (Hochfrequenzsignale; RF für "radio frequency") an eine Fernverarbeitungseinheit übertragen werden.

Die oben skizierte Entwicklung hat zu einem hohen Datenverkehr in Industrieanlagen geführt. In modernen hüttentechnischen Anlagen werden beispielsweise mehrere tausend Messsignale erfasst, übertragen und verarbeitet. Hinzu kommen weitere Kommunikationen, etwa zwischen dem Bedienpersonal, mit Hallenkränen usw., über LAN, WLAN, Bluetooth, Bluetooth LE, RFID, NFC, Funk. Dadurch werden auf relativ engem Raum viele Frequenzen oder Kommunikationskanäle belegt, die sich zum einen gegenseitig stören können, zum anderen kann eine Falschbelegung bzw. eine beabsichtigte oder unbeabsichtigte Mehrfachnutzung einer Frequenz zu Störungen oder Fehlfunktionen im Produktionsprozess führen. Die Bestimmung der Fehlerursache kann in solchen Fällen schwierig sein und zu unnötigen Produktionsausfällen führen.

Die US 2014/0024313 A1 beschreibt ein Netzwerk zum Beziehen von Daten in landwirtschaftlichen und anderen Anwendungen.

### Darstellung der Erfindung

Eine Aufgabe der Erfindung besteht darin, ein Verfahren und ein System zur Datenerfassung in einer Industrieanlage, insbesondere einer hüttentechnischen Anlage, bereitzustellen, welche die Störungsanfälligkeit durch Kommunikationsfehler verringern können und einen effizienten Datenaustausch ermöglichen.

Gelöst wird die Aufgabe mit einem Verfahren mit den Merkmalen des Anspruchs 1, sowie einem System mit den Merkmalen des Anspruchs 16. Vorteilhafte Weiterbildungen folgen aus den Unteransprüchen, der folgenden Darstellung der Erfindung sowie der Beschreibung bevorzugter Ausführungsbeispiele.

Das erfindungsgemäße Verfahren ist zur Datenerfassung in einer Industrieanlage ausgelegt, in der Daten vorzugsweise drahtlos zwischen Anlagenkomponenten, dem Bedienpersonal usw. ausgetauscht werden. Insbesondere kommt das Verfahren in einer hüttentechnischen Anlage, besonders bevorzugt in einem Kalt- oder Warmwalzwerk, einer Bandbehandlungsanlage oder einem Stahlwerk zum Einsatz, da in derartigen Anlagen ein hoher Datenverkehr herrscht, eine Vielzahl von Messsignalen erfasst, ausgetauscht und der Steuerung der Anlage zugrunde gelegt werden.

Zur Lösung der Aufgabe wird wenigstens ein unbemanntes Fahrzeug (auch als "UF" bezeichnet) bereitgestellt, das eine Sende- und Empfangseinrichtung zur Übermittlung und zum Empfang von Daten aufweist. Ferner werden ein oder mehrere Kommunikationspartner (auch als "KP" bezeichnet) bereitgestellt, die jeweils eine Sende- und/oder Empfangseinrichtung zur Übermittlung und/oder zum Empfang von Daten aufweisen. Die Sende- und Empfangseinrichtungen sind hierbei eingerichtet, d.h. aufeinander abgestimmt, um zwischen dem unbemannten Fahrzeug und dem Kommunikationspartner Daten auszutauschen. Zum Austausch von Daten zwischen dem unbemannten Fahrzeug und dem Kommunikationspartner begibt sich das unbemannte Fahrzeug an einen Übertragungsort in Kommunikationsnähe des Kommunikationspartners, um anschließend den Datenaustausch vorzunehmen. Das UF und/oder der KP weisen vorzugsweise eine Einrichtung zur Speicherung von Daten, besonders bevorzugt zur temporären Speicherung von Daten, auf.

Gemäß einer bevorzugten Ausführungsform können das unbemannte Fahrzeug und/oder der Kommunikationspartner einen Zeit- und/oder Ortsstempel und/oder eine Komponenten-ID austauschen und mitprotokolieren. Durch eine bidirektionale Verwendung von Zeit- und/oder Ortsstempeln und/oder einer Komponenten-ID kann vor allem bei einer weiteren Verarbeitung der Daten, z. B. durch ein Prozessleitsystem, sichergestellt werden, dass die Daten dem richtigen Kommunikationspartner, sprich der richtigen Anlagenkomponente zugeordnet werden. Gleichzeitig kann durch die Verwendung von Komponenten-IDs sichergestellt werden, dass nur autorisierte Komponenten miteinander kommunizieren, so dass z. B. die Möglichkeit von Industriespionage zumindest reduziert wird. Die Zeit- und/oder Ortsstempel sowie die Komponenten-ID werden vorzugsweise während der Kommunikation mitprotokolliert, vorzugweise vom UF oder von beiden Kommunikationspartnern.

Da die ausgetauschten und mitprotokollierten Daten von einem KP nicht zwangsläufig direkt vom UF an einen weiteren Kommunikationspartner übergeben werden müssen, besitzt das UF und/oder die KP vorzugsweise eine Vorrichtung zum Speichern von Daten. Damit wird z. B. sichergestellt, dass die Daten auch nach dem Ende der Kommunikation zur Verfügung stehen und beispielsweise in einem späteren Schritt weiterverarbeitet werden können.

Der Übertragungsort kann ein wohl definierter Ort in der näheren Umgebung des Kommunikationspartners sein, der Übertragungsort kann aber auch ein Bereich sein, innerhalb dem eine störungsfreie Kommunikation gewährleistet ist. Der mitprotokollierte Ortsstempel ist in diesem Zusammenhang geeignet, um den Übertragungsort, und ggf. damit auch zusätzlich den oder die Kommunikationspartner zu identifizieren.

Anstatt den Datenaustausch mit einer hohen Übertragungsleistung, über eine lange Strecke in der Industrieanlage durchzuführen, begibt sich das unbemannte Fahrzeug gezielt in die Umgebung eines Kommunikationspartners, d.h. an den Übertragungsort, um den Datenaustausch über eine vergleichsweise kurze Distanz zu realisieren. Auf diese Weise wird eine sichere und zuverlässige Datenübertragung sichergestellt. Die Datenübertragung wird vom Datenverkehr im "Hintergrund" der Industrieanlage nicht oder nur wenig beeinflusst, es wird aufgrund der Nähe zwischen dem UF und dem KP sichergestellt, dass selbst bei einer beabsichtigten oder unbeabsichtigten Verwendung einer bereits belegten Frequenz keine Kommunikationsstörung auftritt. Die Störung des Funkverkehrs ist hierbei ein Aspekt. Ein anderer ist, dass zum Beispiel bei Bluetooth die Übertragungsentfernung sehr begrenzt ist und zusätzlich durch viel Metall in der Industrieanlage beeinträchtigt wird. Indem die Daten mittels des unbemannten Fahrzeugs von dem entsprechenden Kommunikationspartner auf diese Weise abgeholt werden, können ferner die erforderlichen Übertragungsleistungen verringert werden. Es sei darauf hingewiesen, dass die Datenübertragung zwischen dem UF und KP vorzugsweise drahtlos erfolgt. Allerdings ist es in bestimmten Anwendungsfällen auch denkbar, dass das UF und der KP zur besonders sicheren Übertragung in physischen Kontakt treten. Dazu können das UF und der KP beispielsweise mit einer oder mehreren dafür geeigneten Steckverbindungen und/oder Kontaktstellen ausgerüstet sein.

Weitere Vorteile der Erfindung sind die Minimierung der zum Betrieb bzw. zur Überwachung des Produktionsprozesses notwendigen Sensorik und dem damit verbundenen Aufwand für die Installation, den Betrieb sowie die Wartung bzw. Instandhaltung. Darüber hinaus kann mit der Erfindung die Sicherheit der in der Anlage arbeitenden Personen erhöht werden, da mit Hilfe der Erfindung z. B. Aufgaben in schwer zugänglichen oder (lebens-) gefährlichen Bereichen durchgeführt werden können. Generell hilft die Erfindung dabei, den Aufwand für spezielle, üblicherweise von einem Menschen durchgeführte Arbeiten zu minimieren.

Erfindungsgemäß ist wenigstens einer der Kommunikationspartner ein Bauteil einer Industrieanlage, das so eingerichtet ist, dass es Betriebsdaten eigenständig aufzeichnen, vorzugsweise verarbeiten und an das am Übertragungsort befindliche unbemannte Fahrzeug übertragen kann. Als ein solches Bauteil kommt beispielsweise in Frage: eine Rolle, etwa eine Arbeitswalze, Stützwalze oder Transportrolle in einem Walzwerk, eine Antriebsvorrichtung, etwa ein Elektromotor, ein Drehlager usw. Den Sende- und/oder Empfangseinrichtungen des Bauteils oder der mehreren Bauteile sind vorzugsweise jeweils Vorrichtungen, beispielsweise Sensoren mit Datenverarbeitungseinheit, zugeordnet und mit diesen physisch oder drahtlos verbunden, die so eingerichtet sind, dass sie Betriebsdaten eigenständig aufzeichnen und gegebenenfalls aufbereiten, etwa digitalisieren, können. Auf diese Weise lässt sich die Zuverlässigkeit des Produktionsprozesses der Industrieanlage erhöhen, denn durch den UF-gestützten Datenaustausch werden Kommunikationsstörungen im Bereich der Prozessüberwachung und Prozesssteuerung verringert.

Vorzugsweise weist das unbemannte Fahrzeug einen Akku als elektrische Energiequelle für den Betrieb desselben auf, wobei am Übertragungsort vorzugsweise eine Ladeeinrichtung zum automatischen Laden des Akkus oder eine Einrichtung zum automatischen Austausch des Akkus vorgesehen ist. So kann die Kommunikationszeit zwischen dem UF und dem KP effektiv zum Aufladen des Akkus oder zum Austausch desselben genutzt werden. Alternativ kann das UF auch eine andere, autarke Energiequelle bzw. Antriebsquelle verwenden, z. B. einen Verbrennungsmotor oder z. B. im Fall eines schienengebundenen UF eine permanente Energiequelle. Der "Betrieb" des UF umfasst zumindest das eigenständige Bewegen in der Industrieanlage und den Datenaustausch mit dem entsprechenden KP. Wenn das UF ein unbemanntes Luftfahrzeug ist, vorzugsweise ein Multikopter, dann kann am Übertragungsort eine Landeplattform vorgesehen sein, auf der das unbemannte Luftfahrzeug zum Datenaustausch landet, wodurch der Akku geschont wird. Die Landeplattform
kann mit der erwähnten Ladeeinrichtung oder der Einrichtung zum Austausch des Akkus ausgerüstet sein.

Vorzugsweise ist das unbemannte Fahrzeug so eingerichtet, dass es von einem Übertragungsort aus mit mehreren Kommunikationspartnern Daten austauschen kann, wodurch der Datenaustausch, d.h. das "Einsammeln" oder "Verteilen" von Daten besonders effizient erfolgen kann. Eine etwaige Verwendung von Komponenten-IDs und/oder Zeit- und/oder Ortsstempeln ermöglicht dabei die Zuordnung der Daten zum jeweiligen KP.

Vorzugsweise sind mehrere Kommunikationspartner vorgesehen, wobei einer derselben eine Basis ist, die so eingerichtet ist, dass sie Daten, die sie von dem UF empfängt, zur Überwachung und/oder Steuerung des Produktionsprozesses der Industrieanlage weiterverarbeiten kann. Vorzugsweise erfolgen der Datenaustausch zwischen dem UF und der Basis und zwischen dem UF und einem oder mehreren KP über denselben Übertragungskanal, vorzugsweise mittels derselben Funkfrequenz. Auf diese Weise dient das UF als "mobiler Repeater" zur Reichweitenerhöhung.

Auf analoge Weise kann das UF so eingerichtet sein, dass es eine Kommunikation zwischen mehreren KP ermöglicht, so dass das UF als "mobiler Repeater" zwischen mehreren KP fungiert, wodurch die KP miteinander Daten austauschen und sich ggf. aufeinander abstimmen können. Indem ein UF Daten von einem KP zu einem oder mehreren anderen KP überträgt und so eine Kommunikation zwischen einem oder mehreren KP herstellt, kann insbesondere der Produktionsprozess untereinander abgestimmt werden.

Ein oder mehrere KP können mobile Endgeräte sein, über die ein UF auch mit einem Menschen, etwa einer Bedienperson, kommunizieren kann.

Vorzugsweise sind mehrere Kommunikationspartner vorgesehen, wobei zumindest einer der Kommunikationspartner ein weiteres unbemanntes Fahrzeug ist. Beispielsweise können sich mehrere als "Schwarm" arrangierte UF zwischen einem ersten KP, beispielsweise einem ersten Bauteil, und einem letzten KP, beispielsweise einer Basis, aufhalten. Auf diese Weise können die UF neben den Informationen, die sie mit den benachbarten UF austauschen, optional Informationen mit anderen KP, etwa Bauteilen, austauschen und diese gegebenenfalls entlang der UF-Kette bis zur Basis weiterleiten. Somit können die UF genutzt werden, um Informationen über eine große Distanz weiterzuleiten, gegebenenfalls zu verstärken, zu bündeln, zu verteilen und/oder zu verarbeiten, ohne dass der übrige Funkverkehr gestört wird und ohne dass die einzelnen UF große Distanzen zurücklegen müssen, um die Daten von den Kommunikationspartnern einzusammeln. Dazu können die UF auf speziellen Landeplattformen landen bzw. diese aufsuchen oder an bestimmte Ruhestellen andocken, um Energie zu sparen oder sich aufzuladen, wobei sie somit nicht ständig in Bewegung sein müssen.

Vorzugsweise ist die Sendeleistung des unbemannten Fahrzeugs größer, als die des Kommunikationspartners, wodurch das UF die vom KP eingesammelten Daten über eine relativ dazu größere Distanz beispielsweise an die Basis oder ein anderes UF weiterleiten kann.

Vorzugsweise ist das unbemannte Fahrzeug so eingerichtet, dass es den Übertragungskanal, etwa die Funkfrequenz, zum Datenaustausch anpassen kann. Dadurch lassen sich etwaige Kommunikationsstörungen in der Industrieanlage noch zuverlässiger vermeiden. Die Anpassung des Übertragungskanals kann beispielsweise in Abhängigkeit des Kommunikationspartners und/oder des Aufenthaltsorts des unbemannten Fahrzeugs und/oder der Entfernung des unbemannten Fahrzeugs zum Kommunikationspartner und/oder der freien Übertragungskanäle in der Industrieanlage und/oder der zu übertragenden Datenmenge erfolgen.

Die oben dargelegte Aufgabe wird ferner von einem System zur Datenerfassung in einer Industrieanlage gelöst, in der Daten vorzugsweise drahtlos ausgetauscht werden. Insbesondere kommt das System, so wie das Verfahren, in einer hüttentechnischen Anlage, besonders bevorzugt in einem Kalt- oder Warmwalzwerk, einer Bandbehandlungsanlage oder einem Stahlwerk zum Einsatz. Das System weist wenigstens ein unbemanntes Fahrzeug, das eine Sende- und Empfangseinrichtung zur Übermittlung und zum Empfang von Daten aufweist, und einen oder mehrere Kommunikationspartner auf, die jeweils eine Sende- und/oder Empfangseinrichtung zur Übermittlung und/oder zum Empfang von Daten aufweisen. Die Sende- und Empfangseinrichtungen sind eingerichtet, um zwischen dem unbemannten Fahrzeug und dem Kommunikationspartner Daten auszutauschen, wobei das System eingerichtet ist, um ein Verfahren nach einem der vorigen Ansprüche durchzuführen.

Die beschriebenen Verfahren und Systeme kommen bevorzugt in hüttentechnischen Anlagen, insbesondere Kalt- oder Warmwalzwerken, Stahlwerken oder Bandanlagen zur Anwendung. Doch die Erfindung kann auch in anderen Industrieanlagen eingesetzt werden, sofern ein zuverlässiger Datenaustausch zwischen Maschinen, Bauteilen und/oder Datenverarbeitungseinrichtungen durchzuführen ist, insbesondere in einer Umgebung hohen Datenverkehrs.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung der bevorzugten Ausführungsbeispiele erfolgt dabei unter Bezugnahme auf die begleitenden Zeichnungen.

### Kurze Beschreibung der Figuren

Die Figuren 1A und 1B zeigen schematisch den Einsatz eines unbemannten Fahrzeugs zum Datenaustausch mit einem Bauteil einer Industrieanlage in einer Industrieanlage.
Die Figur 2 zeigt schematisch den Einsatz eines unbemannten Fahrzeugs zum Datenaustausch mit mehreren Bauteilen.
Die Figur 3 zeigt schematisch den Einsatz eines unbemannten Fahrzeugs zum Datenaustausch mit mehreren Bauteilen und einer Basis.
Die Figur 4 zeigt schematisch den Einsatz mehrerer unbemannter Fahrzeuge zum Datenaustausch mit mehreren Kommunikationspartnern.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente mit identischen Bezugszeichen versehen, und auf eine wiederholende Beschreibung dieser Elemente wird teilweise verzichtet, um Redundanzen zu vermeiden.

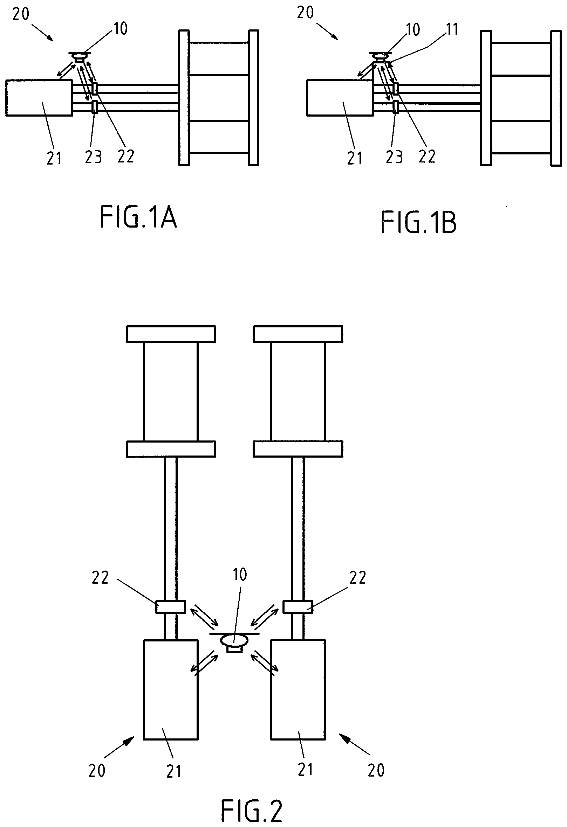

Die Figuren 1A und 1B zeigen schematisch den Einsatz eines unbemannten Fahrzeugs (im Folgenden auch als "UF" bezeichnet) 10 zum Austausch von Informationen mit einem Kommunikationspartner (im Folgenden auch als "KP" bezeichnet) in einer Industrieanlage. Als KP kann etwa eine Maschine, ein Bauteil einer Industrieanlage, eine Komponente usw. in einer Industrieanlage fungieren, die der Einfachheit halber zusammenfassend als "Bauteil" oder "Komponente" bezeichnet und mit dem Bezugszeichen 20 versehen werden. Die Bauteile 20 weisen jeweils eine oder mehrere Sende- und/oder Empfangseinrichtungen 21, 22, 23 auf, um Betriebsdaten mit dem UF 10 auszutauschen. Allerdings können auch andere Einrichtungen Kommunikationspartner für das UF 10 sein, beispielsweise eine Basis 30, weitere UF 10, die weiter unten im Detail beschrieben sind, und/oder mobile Endgeräte, über die ein UF 10 auch mit einem Menschen, etwa einer Bedienperson, kommunizieren kann.

Den Sende- und Empfangseinrichtungen 21, 22, 23 sind jeweils Vorrichtungen (beispielsweise Sensoren mit Datenverarbeitungseinheit) zugeordnet und mit diesen physisch oder drahtlos verbunden, die die so eingerichtet sind, dass sie z. B. Betriebsdaten eigenständig aufzeichnen und gegebenenfalls aufbereiten, etwa digitalisieren, können. Darüber hinaus ist es möglich, dass eine oder mehrere Komponenten 20, insbesondere deren Datenverarbeitungseinheiten, so eingerichtet sind, dass auf diesen Modelle laufen, etwa aus den Betriebsdaten weitere Daten berechnet werden können, beispielsweise ein Modell, das Rückschlüsse auf etwaige Beschädigungen erlaubt.

Als UF 10 kommen beispielsweise in Frage: fliegende UF, wie etwa Multikopter; sogenannte "Unmanned Aerial Vehicles"; "Micro Aerial Vehicles"; fahrende UF, die freibeweglich oder geführt sind, etwa auf Schienen; schwimmende, tauchende UF; Hybrid-UF usw.

Um eine störungsfreie Kommunikation zu ermöglichen, begibt sich das UF 10 an einen Übertragungsort in Kommunikationsnähe zur Komponente 20. Zu diesem Zweck kann eine definierte Stelle als Übertragungsort oder ein Bereich vorgegeben sein. Befindet sich das UF 10 am Übertragungsort in der Nähe der Komponente 20, kann das UF 10 mit dieser uni- oder bidirektional Informationen austauschen. Zu diesen Informationen gehören beispielsweise auch ein Zeit- und/oder Ortsstempel und/oder eine Komponenten-ID. Durch die optional bidirektionale Verwendung von Zeit- und/oder Ortsstempeln und/oder einer Komponenten-ID kann vor allem bei einer weiteren Verarbeitung der Daten, z. B. durch ein Prozessleitsystem, sichergestellt werden, dass die Daten dem richtigen Kommunikationspartner, sprich der richtigen Anlagenkomponente zugeordnet werden. Gleichzeitig kann durch die Verwendung von Komponenten-IDs sichergestellt werden, dass nur autorisierte Komponenten miteinander kommunizieren, so dass z. B. die Möglichkeit von Industriespionage zumindest reduziert wird. Die Zeit- und/oder Ortsstempel sowie die Komponenten-ID werden vorzugsweise während der Kommunikation mitprotokolliert, vorteilhafterweise von beiden Kommunikationspartnern, vorzugsweise jedoch vom UF.

Da die ausgetauschten und mitprotokollierten Daten von einem KP nicht zwangsläufig direkt vom UF an einen weiteren Kommunikationspartner übergeben werden müssen, besitzt das UF eine Vorrichtung zum Speichern der Daten, vorteilhafterweise auch der KP. Damit wird z. B. sichergestellt, dass die Daten auch nach dem Ende der Kommunikation zur Verfügung stehen und beispielsweise in einem späteren Schritt weiterverarbeitet werden können.

Dazu sind das UF 10 und die Komponente 20 mit aufeinander abgestimmten Sende- und/ Empfangseinheiten 21, 22, 23 ausgestattet, die besonders bevorzugt nur über eine kurze Distanz senden und empfangen, um so die "Funkverschmutzung" sowie den Energieverbrauch der Sende- und Empfangseinrichtungen in der Industrieanlage gering zu halten. Auf diese Weise wird sichergestellt, dass selbst bei einer beabsichtigten oder unbeabsichtigten Verwendung einer bereits belegten Frequenz der übrige Funkverkehr in der Umgebung nicht gestört wird und, umgekehrt, der Funkverkehr in der Umgebung den Datenaustausch nicht stört. Anstatt den Datenaustausch mit einer hohen Übertragungsleistung über eine lange Strecke in der Industrieanlage durchzuführen, begibt sich das UF 10 gezielt in die Umgebung einer Komponente 20, um den Datenaustausch über eine kurze Distanz zu realisieren. Dadurch verringert sich nicht nur die Gefahr einer Funkstörung, sondern ferner können die Übertragungsleistungen verringert werden. Gegebenenfalls kann die Kommunikation auch durch eine physische Verbindung zwischen dem UF 10 und dem KP erfolgen.

Die Kommunikation zwischen einem UF 10 und den KP ist in den Figuren mittels Pfeilen dargestellt. In den Figuren 1A und 1B erfolgt die Kommunikation mit einer Komponente 20 mit mehreren Sende- und Empfangseinrichtungen 21, 22 und 23, die etwa mehreren Sensoren zugeordnet sein können. Aus der Figur 2 geht hervor, dass von einem definierten Ort eine Kommunikation auch mit mehreren Komponenten 20 (mit zugehörigen Sende- und Empfangseinrichtungen 21 und 22) erfolgen kann.

Optional kann es sich bei dem definierten Ort um eine Plattform oder Andockstelle 11 handeln, wie es aus der Figur 1B hervorgeht. Ein fliegendes UF 10 müsste dann während des Datenaustauschs nicht in der Luft schweben, sondern könnte auf der Plattform 11 landen und so beispielsweise den Akku schonen, aufladen oder austauschen. Dazu kann die Plattform 11 mit einer Einrichtung zum Austausch des Akkus oder mit einer Ladeeinrichtung ausgestattet sein. Das Laden des Akkus kann durch eine physische elektrische Verbindung oder drahtlos erfolgen.

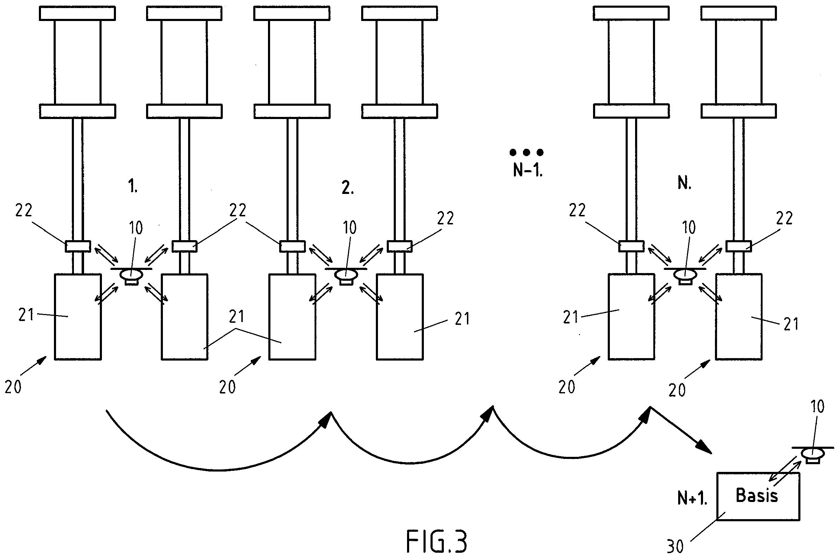

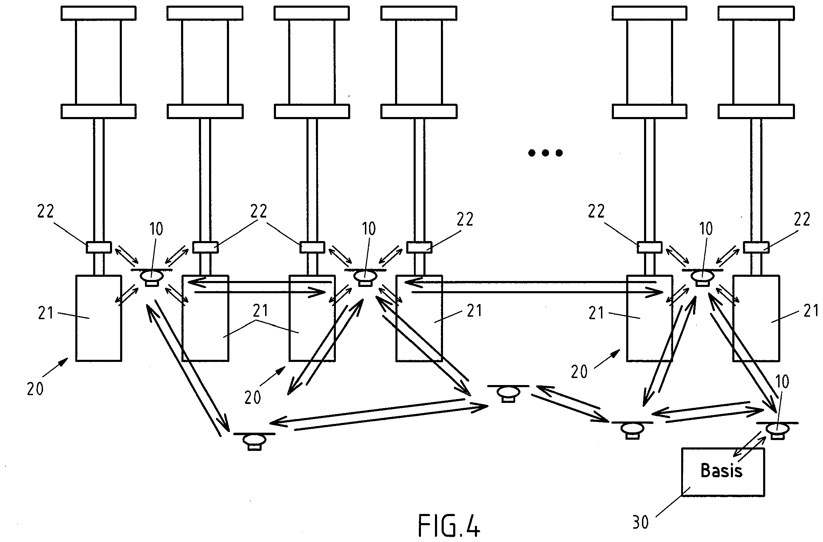

Nachdem das UF 10 Informationen von einer oder mehreren Komponenten 20 empfangen hat, kann es sich an einen anderen Ort bewegen, beispielsweise an einen weiteren Übertragungsort zum Austausch von Informationen mit einer oder mehreren weiteren Komponenten 20 oder einer Basis 30, welche die empfangenen Informationen, z. B. zur Überwachung und Steuerung des Produktionsprozesses, weiterverarbeitet. Das "Einsammeln" oder "Verteilen" von Daten von den bzw. an die Komponenten 20 und der Transport an eine Basis 30 gehen aus den Figuren 3 und 4 hervor.

Auf analoge Weise kann das UF 10 so eingerichtet sein, dass es eine Kommunikation zwischen mehreren KP ermöglicht, so dass das UF 10 als "mobiler Repeater" zwischen mehreren KP fungiert, wodurch die KP miteinander Daten austauschen und sich ggf. untereinander abstimmen können. Indem ein UF 10 Daten von einem KP zu einem oder mehreren anderen KP überträgt und so eine Kommunikation zwischen einem oder mehreren KP herstellt, kann insbesondere der Produktionsprozess untereinander abgestimmt werden.

An der Basis 30 können die gesammelten Daten an weitere Prozesse, beispielsweise an ein Prozessleitsystem übergeben werden. Anschließend kann sich das UF 10 an weitere Übertragungsorte in der Industrieanlage begeben, um erneut Daten mit Kommunikationspartnern auszutauschen. Es sei darauf hingewiesen, dass auch die Basis 30 mit einer Plattform oder Andockstelle ausgerüstet sein kann, wie es oben mit Bezug auf die Plattform/Andockstelle 11 beschrieben ist.

Gemäß einem bevorzugten Ausführungsbeispiel verfügt das UF 10 über eine stärkere Funkleistung als die Komponente 20, wodurch es aus einer größeren Entfernung (im Vergleich zur Komponente 20) z. B. mit der Basis 30 oder einem mobilen Endgerät kommunizieren kann, ohne dass der übrige Funkverkehr gestört wird. Die Störung des Funkverkehrs ist hierbei ein Aspekt. Ein anderer ist, dass zum Beispiel bei Bluetooth die Übertragungsentfernung sehr begrenzt ist und zusätzlich durch viel Metall in der Industrieanlage beeinträchtigt wird. Zum Austausch mit der Basis 30 kann gemäß einem weiteren Ausführungsbeispiel das UF 10 die gleiche Funkfrequenz wie zum Austausch mit der Komponente 20 nutzen. In diesem Fall fungiert das UF 10 als ein "mobiler Repeater" zur Reichweitenerhöhung. Alternativ können unterschiedliche Frequenzen verwendet werden.

Neben einer Kommunikation mit Komponenten 20 der Industrieanlage und einer Basis 30 kann das UF 10 auch mit weiteren UF 10 kommunizieren, wie es in der Figur 4 gezeigt ist. Mehrere als "Schwarm" arrangierte UF 10 können sich zwischen dem ersten KP, beispielsweise einer ersten Komponente 20, und dem letzten KP, beispielsweise der Basis 30, aufhalten. Auf diese Weise können die UF 10 neben den Informationen, die sie mit den benachbarten UF 10 austauschen, optional Informationen mit anderen KP, etwa Komponenten 20, austauschen und diese gegebenenfalls entlang der UF-Kette bis zur Basis 30 weiterleiten. Somit können die UF 10 genutzt werden, um Informationen über eine große Distanz zu transportieren, zu verstärken, zu bündeln, zu verteilen, zu verarbeiten und/oder zu speichern, vorzugsweise temporär, ohne dass der übrige Funkverkehr gestört wird und ohne dass die einzelnen UF 10 große Distanzen zurücklegen müssen, um die Daten der KP 20 einzusammeln oder an die KP 20 zu verteilen. Optional können die UF dazu auch spezielle Plattformen aufsuchen.

Gemäß einem bevorzugten Ausführungsbeispiel sind die UF 10 so eingerichtet, dass sie ihre Funkfrequenzen anpassen können, beispielsweise in Abhängigkeit des betreffenden KP, des Aufenthaltsorts, der Entfernung zum KP, der freien Frequenzen im betreffenden Anlagenbereich, der Datenmenge usw. Diese Anpassung kann für jeden Kommunikationsvorgang individuell erfolgen.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 10: Unbemanntes Fahrzeug (UF)
- 11: Plattform für das UF am Übertragungsort
- 20: Komponente/Bauteil einer Industrieanlage
- 21, 22, 23: Sende-/Empfangseinrichtung von Komponenten/Bauteilen
- 30: Basis

## Patentansprüche

1. Verfahren zur Datenerfassung in einer Industrieanlage, insbesondere einer hüttentechnischen Anlage, besonders bevorzugt in einem Kalt- oder Warmwalzwerk, einer Bandbehandlungsanlage oder einem Stahlwerk, wobei in der Industrieanlage Daten vorzugsweise drahtlos ausgetauscht werden, wobei das Verfahren aufweist:
Bereitstellen wenigstens eines unbemannten Fahrzeugs (10), das eine Sende- und Empfangseinrichtung zur Übermittlung, vorzugsweise drahtlos, und zum Empfang, vorzugsweise drahtlos, von Daten aufweist;
Bereitstellen eines oder mehrerer Kommunikationspartner (10, 20, 30), die jeweils eine Sende- und Empfangseinrichtung (21, 22, 23) zur Übermittlung, vorzugsweise drahtlos, und zum Empfang, vorzugsweise drahtlos, von Daten aufweisen; wobei
die Sende- und Empfangseinrichtungen (21, 22, 23) eingerichtet sind, um zwischen dem unbemannten Fahrzeug (10) und dem Kommunikationspartner (10, 20, 30) Daten auszutauschen,
zum Austausch von Daten zwischen dem unbemannten Fahrzeug (10) und dem Kommunikationspartner (10, 20, 30) sich das unbemannte Fahrzeug (10) an einen Übertragungsort in Kommunikationsnähe des Kommunikationspartners (10, 20, 30) begibt, um anschließend den Datenaustausch vorzunehmen, und
wenigstens einer der Kommunikationspartner (10, 20, 30) ein Bauteil (20) einer Industrieanlage ist, das so eingerichtet ist, dass es Betriebsdaten eigenständig aufzeichnen, vorzugsweise verarbeiten und an das am Übertragungsort befindliche unbemannte Fahrzeug (10) übertragen kann.

2. Verfahren nach Anspruch 1,
**dadurch gekennzeichnet, dass** das unbemannte Fahrzeug (10) und/oder der Kommunikationspartner (10, 20, 30) einen Zeit- und/oder Ortsstempel und/oder eine Komponenten-ID austauschen und mitprotokollieren.

3. Verfahren nach Anspruch 1 oder 2,
**dadurch gekennzeichnet, dass** das Bauteil (20) eine Rolle, vorzugsweise Arbeitswalze, Stützwalze oder Transportrolle in einem Walzwerk; eine Antriebsvorrichtung, vorzugsweise ein Elektromotor; oder ein Drehlager ist.

4. Verfahren nach einem der vorigen Ansprüche,
**dadurch gekennzeichnet, dass** das unbemannte Fahrzeug (10) eine autarke Energiequelle, vorzugsweise einen Akku, für den Betrieb des unbemannten Fahrzeugs (10) aufweist und am Übertragungsort vorzugsweise eine Einrichtung zum automatischen Laden, Nachfüllen und/oder Austausch der Energiequelle vorgesehen ist.

5. Verfahren nach einem der vorigen Ansprüche,
**dadurch gekennzeichnet, dass** zum Austausch von Daten zwischen dem unbemannten Fahrzeug (10) und dem Kommunikationspartner (10, 20, 30) sich das unbemannte Fahrzeug (10) und der Kommunikationspartner (10, 20, 30) in physischen Kontakt treten, wobei zu diesem Zweck das unbemannte Fahrzeug (10) und/oder der Kommunikationspartner (10, 20, 30) mit einer oder mehreren Steckverbindungen und/oder Kontaktstellen ausgerüstet sind.

6. Verfahren nach einem der vorigen Ansprüche,
**dadurch gekennzeichnet, dass** das unbemannte Fahrzeug (10) ein unbemanntes Luftfahrzeug ist, vorzugsweise ein Multikopter.

7. Verfahren nach Anspruch 6,
**dadurch gekennzeichnet, dass** am Übertragungsort eine Landeplattform vorgesehen ist, auf der das unbemannte Luftfahrzeug zum Datenaustausch landet.

8. Verfahren nach einem der vorigen Ansprüche,
**dadurch gekennzeichnet, dass** das unbemannte Fahrzeug (10) so eingerichtet ist, dass es von einem Übertragungsort aus mit mehreren Kommunikationspartnern (10, 20, 30) Daten austauschen kann.

9. Verfahren nach einem der vorigen Ansprüche,
**dadurch gekennzeichnet, dass** mehrere Kommunikationspartner (10, 20, 30) vorgesehen sind, wobei einer der Kommunikationspartner eine Basis (30) ist, die so eingerichtet ist, dass sie Daten, die sie von dem unbemannten Fahrzeug (10) empfängt, zur Überwachung und/oder Steuerung des Produktionsprozesses der Industrieanlage weiterverarbeiten kann.

10. Verfahren nach Anspruch 9,
**dadurch gekennzeichnet, dass** der Datenaustausch zwischen dem unbemannten Fahrzeug (10) und der Basis (30) und zwischen dem unbemannten Fahrzeug (10) und einem oder mehreren weiteren Kommunikationspartnern (10, 20, 30) über denselben Übertragungskanal, vorzugsweise mittels derselben Funkfrequenz erfolgt.

11. Verfahren nach einem der vorigen Ansprüche,
**dadurch gekennzeichnet, dass** mehrere Kommunikationspartner (10, 20, 30) vorgesehen sind, wobei zumindest einer der Kommunikationspartner ein weiteres unbemanntes Fahrzeug (10) ist.

12. Verfahren nach einem der vorigen Ansprüche,
**dadurch gekennzeichnet, dass** die Sendeleistung des unbemannten Fahrzeugs (10) größer ist, als die des Kommunikationspartners (10, 20, 30).

13. Verfahren nach einem der vorigen Ansprüche,
**dadurch gekennzeichnet, dass** das unbemannte Fahrzeug (10) so eingerichtet ist, dass es den Übertragungskanal, vorzugsweise die Funkfrequenz, zum Datenaustausch anpassen kann.

14. Verfahren nach Anspruch 13,
**dadurch gekennzeichnet, dass** die Anpassung des Übertragungskanals in Abhängigkeit des Kommunikationspartners (10, 20, 30) und/oder des Aufenthaltsorts des unbemannten Fahrzeugs (10) und/oder der Entfernung des unbemannten Fahrzeugs (10) zum Kommunikationspartner (10, 20, 30) und/oder der freien Übertragungskanäle in der Industrieanlage und/oder der zu übertragenden Datenmenge erfolgt.

15. System zur Datenerfassung in einer Industrieanlage, insbesondere einer hüttentechnischen Anlage, besonders bevorzugt in einem Kalt- oder Warmwalzwerk, einer Bandbehandlungsanlage oder einem Stahlwerk, wobei in der Industrieanlage Daten vorzugsweise drahtlos ausgetauscht werden, wobei das System aufweist:
wenigstens ein unbemanntes Fahrzeug (10), das eine Sende- und Empfangseinrichtung zur Übermittlung, vorzugsweise drahtlos, und zum Empfang, vorzugsweise drahtlos, von Daten aufweist;
einen oder mehrere Kommunikationspartner (10, 20, 30), die jeweils eine Sende- und Empfangseinrichtung (21, 22, 23) zur Übermittlung, vorzugsweise drahtlos, und zum Empfang, vorzugsweise drahtlos, von Daten aufweisen;
wobei wenigstens einer der Kommunikationspartner (10, 20, 30) ein Bauteil (20) einer Industrieanlage ist, das so eingerichtet ist, dass es Betriebsdaten eigenständig aufzeichnen, vorzugsweise verarbeiten und an das am Übertragungsort befindliche unbemannte Fahrzeug (10) übertragen kann, und wobei die Sende- und Empfangseinrichtungen (21, 22, 23) eingerichtet sind, um zwischen dem unbemannten Fahrzeug (10) und dem Kommunikationspartner (10, 20, 30) Daten auszutauschen, und
das System eingerichtet ist, um ein Verfahren nach einem der vorigen Ansprüche durchzuführen.

## Claims

1. Method for data acquisition in an industrial facility, particularly a metallurgical plant, particularly preferably in a cold-rolling or hot-rolling mill, a strip treatment plant or a steelworks, wherein data are exchanged in preferably wire-free manner in the industrial facility and wherein the method comprises:
providing at least one unmanned vehicle (10) comprising a transmitting and receiving device for transmission, preferably wirelessly, and reception, preferably wirelessly, of data;
providing one or more communication partners (10, 20, 30) each comprising a transmitting and receiving device (21, 22, 23) for transmission, preferably wirelessly and reception, preferably wirelessly, of data; wherein
the transmitting and receiving devices (21, 22, 23) are arranged to exchange data between the unmanned vehicle (10) and the communication partner (10, 20, 30),
for exchange of data between the unmanned vehicle (10) and the communication partner (10, 20, 30) the unmanned vehicle (10) moves to a transfer location in communication proximity of the communication partner (10, 20, 30) in order to subsequently undertake the data exchange, and
at least one of the communication partners (10, 20, 30) is a component (20) of an industrial facility, which component is so arranged that it can independently record, preferably process, operating data and can transfer the data to the unmanned vehicle (10) present at the transfer location.

2. Method according to claim 1, **characterised in that** the unmanned vehicle (10) and/or the communication partner (10, 20, 30) exchanges or exchange and registers or register a time and/or location stamp and/or a component ID.

3. Method according to claim 1 or 2, **characterised in that** the component (20) is a roller, preferably a working roll, backing roll or transport roller in a rolling mill, a drive device, preferably an electric motor, or a rotary bearing.

4. Method according to any one of the preceding claims, **characterised in that** the unmanned vehicle (10) has an autonomous energy source, preferably a battery, for operation of the unmanned vehicle (10) and a device for automatic charging, recharging and/or exchange of the energy source is preferably provided at the transfer location.

5. Method according to any one of the preceding claims, **characterised in that** for exchange of data between the unmanned vehicle (10) and the communication partner (10, 20, 30) the unmanned vehicle (10) and the communication partner (10, 20, 30) come into physical contact, wherein for this purpose the unmanned vehicle (10) and/or the communication partner (10, 20, 30) is or are equipped with one or more plug connections and/or contact points.

6. Method according to any one of the preceding claims, **characterised in that** the unmanned vehicle (10) is an unmanned air vehicle, preferably a multicopter.

7. Method according to claim 6, **characterised in that** a landing platform on which the unmanned air vehicle lands for the purpose of data exchange is provided at the transfer location.

8. Method according to any one of the preceding claims, **characterised in that** the unmanned vehicle (10) is equipped so that it can exchange data from a transfer location with several communication partners (10, 20, 30).

9. Method according to any one of the preceding claims, **characterised in that** several communication partners (10, 20, 30) are provided, wherein one of the communication partners is a base (30) which is equipped so that it can further process data, which it receives from the unmanned vehicle (1), for processing and/or control of the production process of the industrial facility.

10. Method according to claim 9, **characterised in that** the data exchange between the unmanned vehicle (10) and the base (30) and between the unmanned vehicle (10) and the one or more further communication partners (10, 20, 30) takes place by way of the same transmission channel, preferably by means of the same radio frequency.

11. Method according to any one of the preceding claims, **characterised in that** several communication partners (10, 20, 30) are provided, wherein at least one of the communication partners is an unmanned vehicle (10).

12. Method according to any one of the preceding claims, **characterised in that** the transmission power of the unmanned vehicle (10) is greater than that of the communication partner (10, 20, 30).

13. Method according to any one of the preceding claims, **characterised in that** the unmanned vehicle (10) is so arranged that it can adapt the transmission channel, preferably the radio frequency, for the data exchange.

14. Method according to claim 13, **characterised in that** the adaptation of the transmission channel is carried out in dependence on the communication partner (10, 20, 30) and/or the location of the unmanned vehicle (10) and/or the distance of the unmanned vehicle (10) from the communication partner (10, 20, 30) and/or the free transmission channels in the industrial facility and/or the amount of data to be transmitted.

15. System for data acquisition in an industrial facility, particularly a metallurgical plant, particularly preferably a cold-rolling or hot-rolling mill, a strip treatment plant or a steelworks, wherein data are exchanged preferably in wire-free manner in the industrial facility and wherein the system comprises:
at least one unmanned vehicle (10) comprising a transmitting and receiving device for transmission, preferably wirelessly, and reception, preferably wirelessly, of data;
one or more communication partners (10, 20, 30) each comprising a transmitting and receiving device (21, 22, 23) for transmission, preferably wirelessly and reception, preferably wirelessly, of data;
wherein at least one of the communication partners (10, 20, 30) is a component (20) of an industrial facility, which component is so arranged that it can independently record, preferably process, operating data and can transfer the data to the unmanned vehicle (10) present at the transfer location, and
wherein the transmitting and receiving devices (21, 22, 23) are arranged to exchange data between the unmanned vehicle (10) and the communication partner (10, 20, 30) and the system is arranged to perform a method according to any one of the preceding claims.

## Revendications

1. Procédé pour l'enregistrement des données dans une installation industrielle, en particulier dans une installation technique de haut-fourneau, de manière particulièrement préférée dans un laminoir à froid ou à chaud, dans une installation de traitement de bandes ou dans une aciérie; dans lequel, dans l'installation industrielle, des données sont échangées de préférence sans fil ; dans lequel le procédé présente le fait de :
procurer au moins un véhicule sans conducteur (10) qui présente un mécanisme d'envoi et de réception pour la transmission, de préférence sans fil, et pour la réception, de préférence sans fil, de données ;
procurer un ou plusieurs partenaires de communication (10, 20, 30) qui présentent respectivement un mécanisme d'envoi et de réception (21, 22, 23) pour la transmission, de préférence sans fil, et pour la réception, de préférence sans fil, de données ; dans lequel les mécanismes d'envoi et de réception (21, 22 ,23) sont conçus pour échanger des données entre le véhicule sans conducteur (10) et le partenaire de communication (10, 20, 30) ;
dans le but d'échanger des données entre le véhicule sans conducteur (10) et le partenaire de communication (10, 20, 30), le véhicule sans conducteur (10) se rend à un endroit de transfert à proximité de communication du partenaire de communication (10, 20, 30) pour procéder ensuite à l'échange de données ; et
au moins un des partenaires de communication (10, 20, 30) représente un élément constitutif (20) d'une installation industrielle, qui est conçu d'une manière telle qu'il peut, de manière autonome, enregistrer, de préférence traiter des données d'exploitation, et les transférer au véhicule sans conducteur (10) se trouvant à l'endroit de transfert.

2. Procédé selon la revendication 1, **caractérisé en ce que** le véhicule sans conducteur (10) et/ou le partenaire de communication (10, 20, 30) enregistrent de manière conjointe et échangent un marqueur temporel et/ou un marqueur de localisation et/ou une identité de composant.

3. Procédé selon la revendication 1 ou 2, **caractérisé en ce que** l'élément constitutif (20) représente un rouleau, de préférence un cylindre de travail, un cylindre d'appui ou un rouleau de transport dans un laminoir; un dispositif d'entraînement, de préférence un moteur électrique ; ou un palier rotatif.

4. Procédé selon l'une quelconque des revendications précédentes, **caractérisé en ce que** le véhicule sans conducteur (10) présente une source d'énergie autarcique, de préférence un accumulateur, pour l'alimentation du véhicule sans conducteur (10) et, à l'endroit de transfert, est prévu de préférence un mécanisme pour le chargement automatique, la réalimentation automatique et/ou l'échange automatique de la source d'énergie.

5. Procédé selon l'une quelconque des revendications précédentes, **caractérisé en ce que**, pour l'échange de données entre le véhicule sans conducteur (10) et le partenaire de communication (10, 20, 30), le véhicule sans conducteur (10) et le partenaire de communication (10, 20, 30) entrent en contact physique ; dans lequel, à cet effet, le véhicule sans conducteur (10) et/ou le partenaire de communication (10, 20, 30) sont équipés d'une ou de plusieurs connexions enfichables et/ou d'un ou de plusieurs points de contact.

6. Procédé selon l'une quelconque des revendications précédentes, **caractérisé en ce que** le véhicule sans conducteur (10) représente un véhicule aérien téléguidé, de préférence un multicoptère.

7. Procédé selon la revendication 6, **caractérisé en ce que**, à l'endroit de transfert, on prévoit une plate-forme d'atterrissage sur laquelle atterrit le véhicule aérien téléguidé à des fins d'échange de données.

8. Procédé selon l'une quelconque des revendications précédentes, **caractérisé en ce que** le véhicule sans conducteur (10) est conçu d'une manière telle qu'il peut échanger des données à partir d'un endroit de transfert avec plusieurs partenaires de communication (10, 20, 30).

9. Procédé selon l'une quelconque des revendications précédentes, **caractérisé en ce qu'**on prévoit plusieurs partenaires de communication (10, 20, 30) ; dans lequel un des partenaires de communication représente une base (30) qui est conçue d'une manière telle qu'elle peut soumettre à un traitement ultérieur des données qu'elle reçoit à partir du véhicule sans conducteur (10) à des fins de surveillance et/ou de commande du processus de production de l'installation industrielle.

10. Procédé selon la revendication 9, **caractérisé en ce que** l'échange de données entre le véhicule sans conducteur (10) et la base (30) et entre le véhicule sans conducteur (10) et un ou plusieurs autres partenaires de communication (10, 20, 30) a lieu via le même canal de transfert, de préférence au moyen de la même fréquence radio.

11. Procédé selon l'une quelconque des revendications précédentes, **caractérisé en ce qu'**on prévoit plusieurs partenaires de communication (10, 20, 30^); dans lequel au moins un des partenaires de communication représente un véhicule supplémentaire sans conducteur (10).

12. Procédé selon l'une quelconque des revendications précédentes, **caractérisé en ce que** la puissance d'émission du véhicule sans conducteur (10) est supérieure à celle du partenaire de communication (10, 20, 30).

13. Procédé selon l'une quelconque des revendications précédentes, **caractérisé en ce que** le véhicule sans conducteur (10) est conçu d'une manière telle qu'il peut adapter le canal de transfert, de préférence la fréquence radio, à des fins d'échange de données.

14. Procédé selon la revendication 13, **caractérisé en ce que** l'adaptation du canal de transfert a lieu en fonction du partenaire de communication (10, 20, 30) et/ou de l'endroit de séjour du véhicule sans conducteur (10) et/ou de l'éloignement du véhicule sans conducteur (10) par rapport au partenaire de communication (10, 20, 30) et/ou des canaux de transfert libres dans l'installation industrielle et/ou de la quantité de données à transférer.

15. Système pour l'enregistrement de données dans une installation industrielle, en particulier dans une installation technique de haut-fourneau, de manière particulièrement préférée dans un laminoir à froid ou à chaud, dans une installation de traitement de bandes ou dans une aciérie ; dans lequel, dans l'installation industrielle, des données sont échangées de préférence sans fil ; dans lequel le système présente :
au moins un véhicule sans conducteur (10) qui présente un mécanisme d'envoi et de réception pour la transmission, de préférence sans fil, et pour la réception, de préférence sans fil, de données ;
un ou plusieurs partenaires de communication (10, 20, 30) qui présentent respectivement un mécanisme d'envoi et de réception (21, 22, 23) pour la transmission, de préférence sans fil, et pour la réception, de préférence sans fil, de données ;
dans lequel au moins un des partenaires de communication (10, 20, 30) représente un élément constitutif (20) d'une installation industrielle, qui est conçu d'une manière telle qu'il peut, de manière autonome, enregistrer, de préférence traiter des données d'exploitation, et les transférer au véhicule sans conducteur (10) se trouvant à l'endroit de transfert ; et dans lequel
les mécanismes d'envoi et de réception (21, 22 ,23) sont conçus pour échanger des données entre le véhicule sans conducteur (10) et le partenaire de communication (10, 20, 30) ; et
le système est conçu pour la mise en oeuvre d'un procédé selon l'une quelconque des revendications précédentes.
